# EUROPÄISCHE PATENTSCHRIFT

(11) **EP 1 834 850 B1**
(45) Veröffentlichungstag und Bekanntmachung des Hinweises auf die Patenterteilung: **05.10.2011**
(21) Anmeldenummer: 06005518.3
(22) Anmeldetag: 17.03.2006
(51) Int. Cl.: B60R 25/10

(54) **Verfahren zur Überwachung eines Fahrzeuginnenraums**
Method to monitor a vehicle interior
Procédé de surveillance de l'espace intérieur d'un véhicule

(43) Veröffentlichungstag der Anmeldung: 19.09.2007
(73) Patentinhaber: Delphi Technologies, Inc., Troy, MI 48007 (US)
(72) Erfinder: Park, Su-Birm, 52457 Aldenhoven (DE); Ghosh, Sharmila, 55128 Mainz (DE)
(74) Vertreter: Denton, Michael John

(56) Entgegenhaltungen:
- DE-A1- 4 030 607
- DE-A1- 4 417 710
- DE-C1- 19 640 426
- US-A- 5 506 567
- US-A1- 2003 179 083
- US-A1- 2004 129 478

## Beschreibung

Die Erfindung betrifft ein Verfahren zur Überwachung eines Fahrzeuginnenraums.

Ein Verfahren gemäß dem Oberbegriff des Anspruchs 1, welches zur Erfassung von Fahrzeuginsassen dient, ist aus der US 2004/0129478 A1 bekannt.

Die US 6,984,818 B1 offenbart ein Verfahren zur Überwachung eines Fahrzeugfensters, bei dem codierte Lichtsignale von einer an einem Fensterrahmen angebrachten Lichtquelle zeitlich zueinander beabstandet in Richtung eines gegenüberliegenden Abschnitts des Fensterrahmens ausgesandt, dort reflektiert und von wenigstens einem Sensor empfangen werden. Die Laufzeiten der empfangenen Lichtsignale werden ermittelt und mit einer Referenzlaufzeit verglichen, um ein in dem Fenster befmdliches Hindernis zu detektieren.

Andere Verfahren zur Überwachung eines Fahrzeuginnenraums dienen zur Detektion eines Einbruchs in den Innenraum eines Kraftfahrzeugs.

Gemäß einem bekannten Verfahren erfolgt die Innenraumüberwachung mittels Radar. Hierbei wird durch eine in dem Innenraum angebrachte Antenne in regelmäßigen zeitlichen Abständen ein elektromagnetisches Signal ausgestrahlt und in der Pause zwischen jeweils zwei aufeinander folgenden Signalen durch dieselbe oder eine zweite Antenne die Reflexion des ausgestrahlten Signals detektiert. In einer Auswerteeinrichtung wird das aufgenommene reflektierte Signal mit dem vorangegangenen reflektierten Signal verglichen. Übersteigt die Signaländerung zwischen zwei aufeinander folgenden reflektierten Signalen, insbesondere eine Frequenzverschiebung, einen vorbestimmten Schwellenwert, so wird ein akustischer und/oder optischer Alarm ausgelöst.

Als problematisch erweist sich bei diesem Verfahren, dass ein sehr langsames Eindringen in den überwachten Innenraum nicht detektierbar ist, weil die Signaländerung zwischen zwei aufeinander folgenden reflektierten Signalen derart klein sein kann, dass der vorbestimmte Schwellenwert nicht überschritten wird.

Problematisch gestaltet sich die Radarüberwachung ferner im Fall von Innenräumen, deren begrenzende Wände mit Fenstern versehen sind, deren Verglasung die elektromagnetischen Radarwellen transmittieren. In diesem Fall werden ausgestrahlte Radarsignale nicht nur innerhalb des Innenraums reflektiert, sondern auch an Objekten, die sich außerhalb des zu überwachenden Raumes befinden. Eine Bewegung solcher außerhalb des Innenraums gelegener Objekte kann zu einer irrtümlichen Auslösung eines Alarms führen. Eine Radarüberwachung von offenen Fahrzeuginnenräumen, wie beispielsweise von Cabriolets oder Pickups, ist aus diesen Gründen nahezu unmöglich.

Darüber hinaus ist bei Radarüberwachungsverfahren ein Eindringen oder Entfernen von solchen Objekten in oder aus dem zu überwachenden Innenraum schwer zu detektieren, welche die ausgestrahlten Radarsignale nur schlecht reflektieren. Dies können beispielsweise aus Kunststoff gefertigte Objekte sein. Zur wirkungsvollen Überwachung solcher Objekte müsste der Schwellenwert derart niedrig eingestellt sein, dass die Gefahr von Fehlalarmen stark erhöht ist.

Der Erfindung liegt die Aufgabe zugrunde, ein Überwachungsverfahren zu schaffen, welches eine zuverlässigere Detektion eines Einbruchs in einen Fahrzeuginnenraum ermöglicht.

Zur Lösung der Aufgabe ist ein Verfahren mit den Merkmalen des Anspruchs 1 vorgesehen.

Bei dem erfindungsgemäßen Verfahren werden codierte Lichtsignale von mindestens einer Lichtquelle zeitlich zueinander beabstandet in den Innenraum ausgesandt, die ausgesandten Lichtsignale von wenigstens einem Sensor empfangen und die Laufzeiten der empfangenen Lichtsignale ermittelt.

Das erfindungsgemäße Verfahren beruht auf dem Lidar-Prinzip ("light detection and ranging"), d.h. es wird im Grunde die Entfernung zwischen der Lichtquelle und im Fahrzeuginnenraum befindlichen Objekten gemessen. Wird ein ausgesandtes Lichtsignal an einem in den Fahrzeuginnenraum eindringenden Objekt reflektiert, so wird das reflektierte Lichtsignal nach einer im Vergleich zu einer Referenz- bzw. Solllaufzeit reduzierten Laufzeit von dem Sensor empfangen. Die Ermittlung einer reduzierten Laufzeit des empfangenen Lichtsignals kann eine vorbestimmte Reaktion des Überwachungssystems auslösen, beispielsweise einen akustischen und/oder optischen Alarm.

Durch die Verwendung von codierten Lichtsignalen wird verhindert, dass irrtümlicherweise "fremde" Lichtsignale, wie z.B. Sonnen- oder Taschenlampenlicht, von dem Sensor detektiert und bei der Laufzeitmessung berücksichtigt werden. Da der Sensor aufgrund der Codierung des ausgesandten Lichtsignals unterscheiden kann, ob es sich bei dem empfangenen Licht um eine Reflexion des ausgesandten Lichtsignals oder um "Fremdlicht" handelt, eignet sich das erfindungsgemäße Verfahren auch zur Überwachung eines offenen Fahrzeugsinnenraums, beispielsweise eines Cabriolets oder Pickups.

Die Verwendung von Lichtsignalen anstelle von beispielsweise Radarsignalen ermöglicht es insbesondere im Falle eines geschlossenen Fahrzeuginnenraums, die Überwachung wirksam auf den Fahrzeuginnenraum zu beschränken. So kann die Wellenlänge der Lichtsignale so gewählt sein, dass diese nicht wesentlich von den Fahrzeuginnenraum begrenzenden Glasscheiben transmittiert, sondern zumindest annähernd vollständig an diesen reflektiert werden, d.h. also den Fahrzeuginnenraum im wesentlichen nicht verlassen können. Auf diese Weise wird verhindert, dass die Laufzeitmessung irrtümlicherweise durch ein an einem außerhalb des Fahrzeuginnenraums gelegenen Objekt reflektiertes Lichtsignal verfälscht und dadurch ein Fehlalarm ausgelöst wird. Als ein besonders geeigneter Wellenlängenbereich für die Lichtsignale kommt beispielsweise der nahe Infrarotbereich in Frage.

Dadurch, dass die erfindungsgemäße Innenraumüberwachung weder durch Fremdlicht, noch durch außerhalb des Fahrzeugs befindliche Objekte "gestört" werden kann, lässt sich ein tatsächlich in den Innenraum eindringendes Objekt zuverlässiger detektieren und die Auslösung eines Fehlalarms wirksamer verhindern.

Gemäß einer vorteilhaften Ausführungsform des Verfahrens werden die Lichtsignale derart in den Innenraum ausgesandt, dass sie vor dem Empfang durch den Sensor an wenigstens einer den Innenraum begrenzenden Fläche reflektiert werden. Das Verfahren beruht also nicht auf dem Prinzip einer Lichtschranke oder eines Lichtvorhangs, sondern es sieht ausdrücklich eine Reflexion der Lichtsignale an wenigstens einer den Innenraum begrenzenden Fläche vor. Die Überwachung des Fahrzeuginnenraums erfolgt gewissermaßen also anhand eines "Echos" der ausgesandten Lichtsignale.

Um mittels eines Lichtsignals einen möglichst großen Bereich des Innenraums abdecken zu können, werden die Lichtsignale nicht wie bei einem Laser als parallele Lichtbündel, sondern bevorzugt als divergierende, z.B. kegelförmige, Lichtbündel ausgestrahlt. Dabei kann die Abstrahlcharakteristik der Lichtquelle so gewählt sein, dass mittels eines einzigen Lichtsignals nahezu der gesamte Innenraum erfasst wird.

Alternativ ist es möglich, zeitgleich oder nacheinander versetzt mehrere Lichtsignale auszusenden, die jeweils einen anderen Teilbereich des Innenraums abdecken. Die einzelnen Teilbereiche des Innenraums können dabei alle mit der gleichen Intensität überwacht werden. Alternativ ist es jedoch auch möglich, einen ausgewählten Teilbereich oder mehrere ausgewählte Teilbereiche intensiver zu überwachen, indem beispielsweise Lichtsignale in kürzeren zeitlichen Abständen in diese Teilbereiche ausgesandt werden.

Aufgrund der divergierenden Abstrahlcharakteristik der Lichtquelle und der daraus resultierenden Reflexion des Lichtsignals an unterschiedlichen Begrenzungsflächen des Innenraums, z.B. Fahrzeugsitzen, Kopfstützen, Armaturenbrett, Hutablage, etc., weisen die reflektierten Signale in Abhängigkeit von der Fläche, an der sie reflektiert wurden, unterschiedlich lange Laufzeiten auf. Zur Vereinfachung der Auswertung der durch den Sensor empfangenen Signale wird deshalb bevorzugt eine durchschnittliche bzw. mittlere Laufzeit aller aus einem ausgesandten Lichtsignal hervorgegangenen reflektierten Signale gebildet. Es wird gewissermaßen also eine "globale" Entfernungsmessung durchgeführt.

Erfindungsgemäß werden die Laufzeiten empfangener Lichtsignale mit einer Referenzlaufzeit verglichen. Auf diese Weise kann ein Alarm ausgelöst werden, wenn die Abweichung der Laufzeit eines empfangenen Lichtsignals von der Referenzlaufzeit einen vorbestimmten Schwellenwert überschreitet. Eine derartige Änderung der Laufzeit ist letztlich ein Indiz für eine signifikante Änderung des Innenraumzustandes gegenüber dem zugrunde gelegten Referenzzustand, z.B. einem bei Aktivierung des Verfahrens ermittelten Ausgangszustand oder einem werksseitig vorgegebenen Referenzzustand. Eine solche Änderung resultiert beispielsweise aus dem Eindringen eines unbefugten Objekts in den Fahrzeuginnenraum.

Die Referenzlaufzeit wird erfindungsgemäß bei einer Aktivierung des Verfahrens aus der Laufzeit eines empfangenen Lichtsignals ermittelt und gespeichert. Mit anderen Worten wird zu Beginn des Verfahrens ein Ausgangszustand des Fahrzeuginnenraums aufgezeichnet und im weiteren Verlauf der Überwachung ein jeweiliger Ist-Zustand des Innenraums detektiert und mit dem aufgezeichneten Ausgangszustand verglichen. Das zur Ermittlung der Referenzlaufzeit herangezogene Lichtsignal wird nachfolgend auch als Referenzlichtsignal bezeichnet.

Erfindungsgemäß wird die Referenzlaufzeit im Verlauf eines Überwachungsvorgangs aktualisiert. Dabei kann die Aktualisierung von Zeit zu Zeit und insbesondere in regelmäßigen Abständen erfolgen. Durch die Aktualisierung der Referenzlaufzeit wird verhindert, dass eine geringfügige und/oder sehr langsam erfolgende Zustandsänderung des Fahrzeuginnenraums, z.B. durch Erwärmung aufgrund von Sonneneinstrahlung, zur Auslösung eines Fehlalarms führt.

Alternativ oder zusätzlich kann die Referenzlaufzeit aktualisiert werden, wenn die Abweichung der Laufzeit eines, insbesondere nach dem Referenzlichtsignal, empfangenen Lichtsignals von der Referenzlaufzeit über einem Rauschpegel liegt und den vorbestimmten Schwellenwert nicht überschreitet. Die Aktualisierung der Referenzlaufzeit erfolgt in diesem Fall also nicht zu einem vorbestimmten Zeitpunkt, sondern bei Bedarf, nämlich dann, wenn sich der Zustand des Innenraums zwar deutlich, aber noch nicht so stark verändert hat, dass die Auslösung eines Alarms nötig wäre.

Gemäß einer weiteren Ausführungsform des Verfahrens wird die ermittelte Referenzlaufzeit mit einer werksseitig vorgegebenen Laufzeit verglichen und bei einer signifikanten Abweichung der ermittelten Referenzlaufzeit von der werksseitig vorgegebenen Laufzeit für das weitere Verfahren die werksseitig vorgegebene Laufzeit als Referenzlaufzeit verwendet. Durch den Vergleich der ermittelten Referenzlaufzeit mit der werksseitig vorgegebenen Laufzeit wird gewissermaßen eine Plausibilitätsprüfung der ermittelten Referenzlaufzeit durchgeführt, d.h. es wird geprüft, ob die ermittelte Referenzlaufzeit als Referenzlaufzeit überhaupt in Betracht kommt.

So kann es bei der Überwachung eines Fahrzeugs mit geöffneten Fenstern oder bei der Überwachung eines offenen Cabriolets dazu kommen, dass die ermittelte Referenzlaufzeit einen Wert annimmt, welcher mit den Abmessungen des zu überwachenden Innenraums nicht kompatibel ist, z.B. signifikant erhöht ist. Die Verwendung einer derartigen Referenzlaufzeit würde die Beurteilung der Laufzeiten nachfolgend empfangener Lichtsignale verfälschen und z.B. die Auslösung eines Fehlalarms nach sich ziehen. Die Zugrundelegung der werksseitig vorgegebenen Laufzeit als Referenzlaufzeit für das weitere Verfahren erhöht in einem solchen Fall die Zuverlässigkeit der Innenraumüberwachung und verhindert insbesondere eine irrtümliche Alarmauslösung.

In diesem Zusammenhang sei darauf hingewiesen, dass es grundsätzlich auch möglich ist, die Auswertung empfangener Lichtsignale ausschließlich durch Vergleich mit einer werksseitig vorgegebenen Laufzeit durchzuführen, d.h. also von der Ermittlung einer Referenzlaufzeit aus der Laufzeit eines empfangenen Lichtsignals zu Beginn des Verfahrens abzusehen.

Weiterer Gegenstand der Erfindung ist außerdem eine Vorrichtung mit den Merkmalen des Anspruchs 7 zur Überwachung eines Fahrzeuginnenraums, insbesondere zur Durchführung des voranstehend beschriebenen Verfahrens.

Mit Hilfe der erfindungsgemäßen Vorrichtung lassen sich die voranstehend genannten Vorteile entsprechend erreichen.

Gemäß einer Ausführungsform der Vorrichtung ist der Sensor im Bereich der Lichtquelle angeordnet. Bevorzugt bildet der Sensor mit der Lichtquelle eine bauliche Einheit. Dies ermöglicht eine besonders einfache und Platz sparende Installation der Überwachungsvorrichtung in einem Fahrzeug. Darüber hinaus ist durch diese Relativanordnung von Lichtquelle und Sensor sichergestellt, dass das von dem Sensor empfangene Lichtsignal mindestens einmal an einer den Fahrzeuginnenraum begrenzenden Fläche reflektiert wurde.

Gemäß einer weiteren Ausführungsform umfasst die Lichtquelle wenigstens eine Leuchtdiode, insbesondere eine im nahen Infrarotbereich emittierende Leuchtdiode (NIR-LED). Derartige Leuchtdioden sind in großer Stückzahl verfügbar und somit kostengünstig erhältlich.

Ein lichtempfindlicher Abschnitt des Sensors kann Silizium aufweisen, da dieses zur Detektion von nah infrarotem Licht besonders gut geeignet ist. Derartige Silizium-Sensoren sind ebenfalls in großer Stückzahl verfügbar und kostengünstig erhältlich.

Die Überwachungsvorrichtung ist insgesamt also mit einem vergleichsweise geringen wirtschaftlichen Aufwand herstellbar.

Vorzugsweise sind bzw. ist der Sensor und/oder die Lichtquelle innerhalb des Innenraums und insbesondere im Bereich eines Fahrzeugdachs, einer Heckscheibe oder einer Frontscheibe eines Fahrzeugs angeordnet. Bei einer derartigen Positionierung des Sensors bzw. der Lichtquelle lässt sich nicht nur ein besonders großer Bereich des Fahrzeuginnenraums überwachen, sondern es sind auch gerade die besonders gefährdeten fensternahen Bereiche des Innenraums erfassbar.

Nachfolgend wird die Erfindung rein beispielhaft anhand einer vorteilhaften Ausführungsform unter Bezugnahme auf die beigefügte Zeichnung beschrieben. Es zeigen:
- Fig. 1: ein Kraftfahrzeug mit einer erfindungsgemäßen InnenraumÜberwachungsvorrichtung; und
- Fig. 2: eine schematische Darstellung verschiedener Komponenten der Überwachungsvorrichtung von Fig. 1.

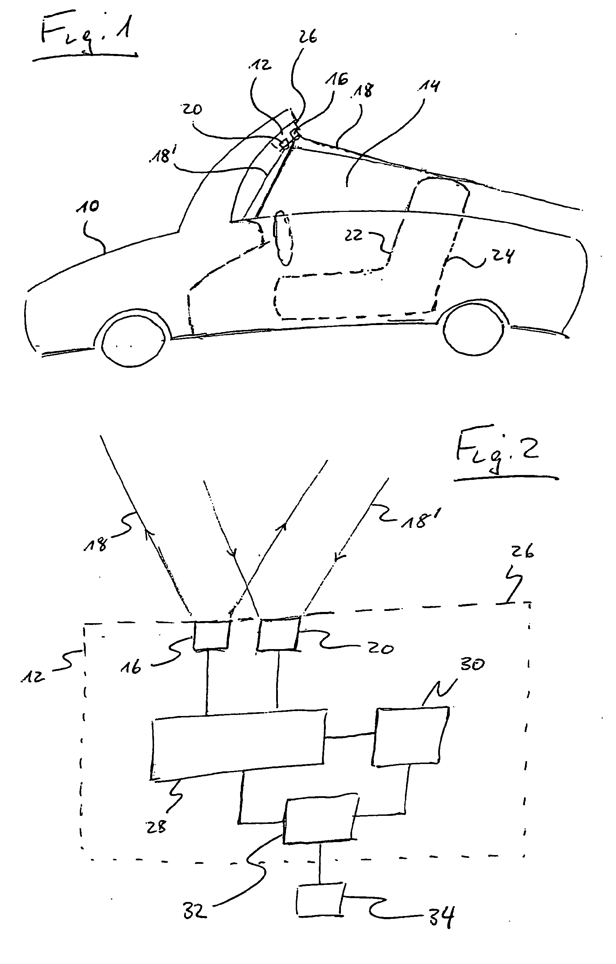

Fig. 1 zeigt ein Kraftfahrzeug 10, im vorliegenden Ausführungsbeispiel ein Cabriolet mit geöffnetem Dach. Das Fahrzeug 10 ist mit einer Vorrichtung 12 zur Überwachung des Fahrzeuginnenraums 14 ausgerüstet, wobei als Innenraum 14 der bei geschlossenem Verdeck durch die Karosserie und das Fahrzeugdach begrenzte Fahrgastraum bezeichnet wird. Alternativ oder zusätzlich ist es bei entsprechender Positionierung der bzw. mindestens einer weiteren Überwachungsvorrichtung 12 auch möglich, einen Kofferraum oder einen offenen oder geschlossenen Laderaum eines Kraftfahrzeugs zu überwachen.

Die Überwachungsvorrichtung 12 verfügt über eine Lichtquelle, die eine im nahen Infrarotbereich emittierende Leuchtdiode (NIR-LED) 16 umfasst. Die Leuchtdiode 16 weist eine divergierende, z.B. kegelförmige, Abstrahlcharakteristik auf, wobei die Leuchtdiode 16 so gerichtet und der Abstrahlwinkel, unter dem die Leuchtdiode 16 Licht 18 aussendet, so gewählt ist, dass zumindest ein vor einem unbefugten Eingriff zu schützender Bereich des Innenraums 14 durch das ausgesandte Licht 18 ausgeleuchtet wird.

Die Überwachungsvorrichtung 12 umfasst ferner einen Sensor 20, der so ausgerichtet ist, dass er an einer den Innenraum 14 begrenzenden Oberfläche, z.B. einer Karosseriefläche oder einer Fläche 22 eines Fahrzeugsitzes 24, reflektiertes Licht 18' der Leuchtdiode 16 empfangen kann. Im dargestellten Ausführungsbeispiel handelt es sich bei dem Sensor 20 um einen Halbleitersensor, der ein für das von der Leuchtdiode 16 emittierte Licht empfindliches Material, z.B. Silizium, aufweist. Die Leuchtdiode 16 und der Sensor 20 bilden eine bauliche Einheit und sind insbesondere in einem gemeinsamen Gehäuse 26 untergebracht.

Damit der Sensor 20 zwischen dem von der Leuchtdiode 16 ausgesandten Licht 18 und Fremdlicht, wie z.B. Sonnenlicht oder Taschenlampenlicht, unterscheiden kann, sendet die Leuchtdiode 16 codierte Lichtsignale aus, beispielsweise pulsbreitenmodulierte Lichtpulse, die zeitlich zueinander beabstandet ausgestrahlt werden.

Das ausgesandte Lichtsignal 18 wird an den Innenraum 14 begrenzenden Flächen, wie z.B. Sitzflächen 22, reflektiert und als reflektiertes Lichtsignal 18' von dem Sensor 20 empfangen. Durch eine Laufzeitermittlungseinheit 28 (Fig. 2) der Vorrichtung 12 wird die Laufzeit des Lichtsignals 18, d.h. also die Zeitdauer zwischen Abstrahlung und Empfang des Lichtsignals 18, ermittelt.

Da das empfangene Licht 18' aufgrund der kegelförmigen Abstrahlcharakteristik der Leuchtdiode 16 nicht nur an einer Fläche, sondern an unterschiedlichen Flächen und/oder mehrmals reflektiert wurde, lässt sich für das reflektierte Lichtsignal 18 keine exakt definierte Laufzeit bestimmen. Vielmehr ermittelt die Laufzeitermittlungseinheit 28 eine gemittelte Laufzeit des empfangenen Lichtsignals 18'. Diese gemittelte Laufzeit gibt letztlich die durchschnittliche oder "globale" Entfernung aller den Innenraum 14 begrenzenden Flächen, an denen eine Reflexion des ausgesandten Lichtsignals 18 stattfindet, zur Überwachungsvorrichtung 12 an. Sofern nichts Gegenteiliges angegeben ist, wird unter dem Ausdruck "Laufzeit" hier stets die gemittelte Laufzeit verstanden.

Die Aktivierung der Überwachungsvorrichtung 12, d.h. also der Start eines Überwachungsvorgangs, kann durch eine Verriegelung des Kraftfahrzeugs 10 oder durch eine Betätigung eines separaten Schalters bewirkt werden oder auch an die Aktivierung eines bereits bestehenden Alarmsystems gekoppelt sein.

Zu Beginn des Überwachungsvorgangs strahlt die Leuchtdiode 16 ein Referenzlichtsignal in den Fahrzeuginnenraum 14 aus. Die in der voranstehend beschriebenen Weise aus dem Referenzlichtsignal ermittelte Laufzeit wird mit einer in einer Speichereinheit 30 (Fig. 2) der Überwachungsvorrichtung 12 abgespeicherten, werksseitig vorgegebenen Laufzeit verglichen. Liegt die ermittelte Laufzeit im Bereich der werksseitig vorgegebenen Laufzeit, so wird die ermittelte Laufzeit als Referenzlaufzeit in der Speichereinheit 30 abgespeichert. Die Referenzlaufzeit bildet gewisserma-ßen einen Ausgangszustand des Fahrzeuginnenraums 14 ab.

Weicht die ermittelte Laufzeit hingegen signifikant von der werksseitig vorgegebenen Laufzeit ab, so wird die werksseitig vorgegebene Laufzeit für das weitere Verfahren als Referenzlaufzeit verwendet.

Nach der Bestimmung der zugrundezulegenden Referenzlaufzeit werden in regelmäßigen zeitlichen Abständen weitere Lichtsignale 18 in den Innenraum 14 ausgestrahlt. Die Reflexionen dieser Signale werden durch den Sensor 20 entsprechend detektiert. Ferner wird in der voranstehend beschriebenen Weise die Laufzeit jedes empfangenen Lichtsignals 18' ermittelt.

Die durch die Laufzeitermittlungseinheit 28 bestimmten Laufzeiten werden mittels einer Komparatoreinheit 32 (Fig. 2) der Überwachungsvorrichtung 12 mit der in der Speichereinheit 30 abgespeicherten Referenzlaufzeit verglichen.

Dringt ein Objekt in den überwachten Teil des Fahrzeuginnenraums 14 ein, so wird das Reflexionsmuster der ausgesandten Lichtsignale 18 beeinflusst und es kommt zu einer Änderung der ermittelten Laufzeiten. Übersteigt die Abweichung einer ermittelten Laufzeit die Referenzlaufzeit um einen vorbestimmten Schwellenwert, so gibt die Komparatoreinheit 32 ein entsprechendes Schaltsignal an ein Alarmsystem 34 aus, durch welches ein akustisches und/oder optisches Alarmsignal ausgelöst werden kann.

Um die Auswertung der ermittelten Laufzeiten an geringfügige und/ oder langsam voranschreitende Veränderungen des Fahrzeuginnenraums 14 anzupassen, die beispielsweise durch eine Erwärmung aufgrund starker Sonneneinstrahlung verursacht werden können, ist von Zeit zu Zeit eine Aktualisierung der in der Speichereinheit 30 abgespeicherten Referenzlaufzeit vorgesehen. Dies gilt insbesondere für den Fall, dass die zu Beginn des Verfahrens ermittelte Laufzeit eines Referenzlichtsignals als Referenzlaufzeit verwendet wird.

Die Aktualisierung der Referenzlaufzeit kann in vorbestimmten regelmäßigen zeitlichen Abständen vorgenommen werden. Alternativ oder zusätzlich ist es jedoch auch möglich, die abgespeicherte Referenzlaufzeit immer dann zu aktualisieren, wenn die Abweichung einer ermittelten Laufzeit von der Referenzlaufzeit über einem Rauschpegel liegt, aber den vorbestimmten Schwellenwert, dessen Überschreitung die Auslösung eines Alarms verursacht, noch nicht übersteigt.

Bei der voranstehend beschriebenen Ausführungsform umfasst die Überwachungsvorrichtung 12 lediglich eine Leuchtdiode 16 und nur einen Sensor 20. Alternativ ist es jedoch auch möglich, die Lichtquelle aus mehreren Leuchtdioden 16 zu bilden, die jeweils in unterschiedliche Teilbereiche des Innenraums 14 abstrahlen. Beispielsweise kann die in Fig. 1 gezeigte Überwachungsvorrichtung 12 mit zwei Leuchtdioden 16 ausgerüstet sein, von denen die eine die Fahrerseite und die andere die Beifahrerseite des Fahrzeuginnenraums 14 überwacht. Bevorzugt sind in einem solchen Fall auch zwei Sensoren 20 vorgesehen, wobei jeder Lichtdiode jeweils ein Sensor 20 zugeordnet ist.

Die Verwendung von mehreren Leuchtdioden 16 bzw. Sensoren 20 ermöglicht es, den Innenraum 14 noch vollständiger zu überwachen. Insbesondere können die Leuchtdioden 16 so gerichtet sein, dass auch solche Bereiche des Innenraums 14 durch die ausgesandten Lichtsignale 18 erfasst werden, die bei Verwendung nur einer Leuchtdiode 16 im Schatten z.B. einer Kopfstütze eines Fahrzeugsitzes 24 liegen.

### Bezugszeichenliste

- 10: Kraftfahrzeug
- 12: Überwachungsvorrichtung
- 14: Innenraum
- 16: Leuchtdiode
- 18: Licht
- 20: Sensor
- 22: Sitzfläche
- 24: Fahrzeugsitz
- 26: Gehäuse
- 28: Laufzeitermittlungseinheit
- 30: Speichereinheit
- 32: Komparatoreinheit
- 34: Alarmsystem

## Patentansprüche

1. Verfahren zur Überwachung eines Fahrzeuginnenraums (14) bei dem
codierte Lichtsignale (18) von mindestens einer Lichtquelle (16) zeitlich zueinander beabstandet in den Innenraum (14) ausgesandt werden,
die ausgesandten Lichtsignale (18) von wenigstens einem Sensor (20) empfangen werden und
die Laufzeiten der empfangenen Lichtsignale (18') ermittelt werden,
**dadurch gekennzeichnet, dass**
die Laufzeiten empfangener Lichtsignale (18') mit einer Referenzlaufzeit verglichen werden, welche bei einer Aktivierung des Verfahrens aus der Laufzeit eines empfangenen Lichtsignals (18') ermittelt und gespeichert wird und welche im Verlauf eines Überwachungsvorgangs aktualisiert wird.

2. Verfahren nach Anspruch 1,
**dadurch gekennzeichnet, dass**
die Lichtsignale (18) derart in den Innenraum (14) ausgesandt werden, dass sie vor dem Empfang durch den Sensor (20) an wenigstens einer den Innenraum (14) begrenzenden Fläche (22) reflektiert werden.

3. Verfahren nach Anspruch 1 oder 2,
**dadurch gekennzeichnet, dass**
ein Alarm ausgelöst wird, wenn die Abweichung der Laufzeit eines empfangenen Lichtsignals (18') von der Referenzlaufzeit einen vorbestimmten Schwellenwert überschreitet.

4. Verfahren nach einem der vorherigen Ansprüche,
**dadurch gekennzeichnet, dass**
die Referenzlaufzeit aktualisiert wird, wenn die Abweichung der Laufzeit eines empfangenen Lichtsignals (18') von der Referenzlaufzeit über einem Rauschpegel liegt und den vorbestimmten Schwellenwert nicht überschreitet.

5. Verfahren nach einem der vorherigen Ansprüche,
**dadurch gekennzeichnet, dass**
die ermittelte Referenzlaufzeit mit einer werksseitig vorgegebenen Laufzeit verglichen wird und bei einer signifikanten Abweichung der ermittelten Referenzlaufzeit von der werksseitig vorgegebenen Laufzeit für das weitere Verfahren die werksseitig vorgegebene Laufzeit als Referenzlaufzeit verwendet wird.

6. Vorrichtung (12) zur Überwachung eines Fahrzeuginnenraums (14), ausgebildet zur Durchführung des Verfahrens nach einem der vorherigen Ansprüche, mit mindestens einer Lichtquelle (16) zum Aussenden eines codierten Lichtsignals (18) in den Innenraum (14), wenigstens einem Sensor (20) zum Empfangen des ausgesandten Lichtsignals (18), einer Laufzeitermittlungseinheit (28) zum Ermitteln der Laufzeit des empfangenen Lichtsignals (18') und einer Komparatoreinheit (32), um die Laufzeit eines empfangenen Lichtsignals (18') mit einer in einer Speichereinrichtung (30) abgespeicherten Referenzlaufzeit, welche im Verlauf eines Überwachungsvorgangs aktualisiert wird, zu vergleichen.

7. Vorrichtung (12) nach Anspruch 6,
**dadurch gekennzeichnet, dass**
die Lichtquelle (16) derart ausgerichtet ist und der Sensor (20) derart relativ zu der Lichtquelle (16) angeordnet ist, dass ein von der Lichtquelle (16) ausgesandtes und von dem Sensor (20) empfangenes Lichtsignal (18) an wenigstens einer den Innenraum (14) begrenzenden Fläche (22) reflektiert wurde.

8. Vorrichtung (12) nach Anspruch 6 oder 7,
**dadurch gekennzeichnet, dass**
die Lichtquelle (16) eine divergierende, z.B. kegelförmige, Abstrahlcharakteristik aufweist.

9. Vorrichtung (12) nach einem der Ansprüche 6 bis 8,
**dadurch gekennzeichnet, dass**
der Sensor (20) im Bereich der Lichtquelle (16) angeordnet ist und insbesondere mit der Lichtquelle (16) eine bauliche Einheit bildet.

10. Vorrichtung (12) nach einem der Ansprüche 6 bis 9,
**dadurch gekennzeichnet, dass**
die Lichtquelle wenigstens eine Leuchtdiode (16), insbesondere eine im nahen infraroten Bereich emittierende Leuchtdiode (NIR-LED), aufweist und/oder dass ein lichtempfindlicher Abschnitt des Sensors (20) Silizium aufweist.

11. Vorrichtung (12) nach einem der Ansprüche 6 bis 10,
**dadurch gekennzeichnet, dass**
der Sensor (20) und/oder die Lichtquelle (16) innerhalb des Innenraums (14) und insbesondere im Bereich eines Fahrzeugdachs, einer Heckscheibe oder einer Frontscheibe eines Kraftfahrzeugs (10) angeordnet sind bzw. ist.

## Claims

1. Method for monitoring a vehicle interior (14) wherein
coded light signals (18) of at least one light source (16) are emitted into the interior (14), separated from one another in time,
the emitted light signals (18) are received by at least one sensor (20), and
the runtimes of the received light signals (18') are determined,
**characterized in that**
the runtimes of received light signals (18') are compared with a reference runtime which is determined from the runtime of a received light signal (18') on activation of the method and stored and which is updated during the monitoring process.

2. The method according to claim 1,
**characterized in that**
the light signals (18) are emitted into the interior (14) such that they are reflected on at least one surface (22) limiting the interior (14) before reception by the sensor (20).

3. The method according to claim 1 or 2,
**characterized in that**
an alarm is triggered if the deviation of the runtime of a received light signal (18') from the reference runtime exceeds a pre-determined threshold value.

4. The method according to any of the preceding claims,
**characterized in that**
the reference runtime is updated if the deviation of the runtime of a received light signal (18') from the reference runtime is above a noise level and does not exceed the pre-determined threshold value.

5. The method according to any of the preceding claims,
**characterized in that**
the determined reference runtime is compared with a factory-set runtime, and wherein, when there is a significant deviation of the determined reference runtime from the factory-set runtime, the factory-set runtime is used as reference runtime for the further process.

6. Device (12) for monitoring a vehicle interior (14), operable for performing the method according to any of the preceding claims, having at least one light source (16) for emitting a coded light signal (18) into the interior (14), at least one sensor (20) for receiving the emitted light signal (18), a runtime determination unit (28) for determining the runtime of the received light signal (18'), and a comparator (32) for comparing the runtime of a received light signal (18') with a reference runtime stored in a storage device (30), which is updated during a monitoring process.

7. Device (12) according to claim 6,
**characterized in that**
the light source (16) is oriented such and the sensor (20) is arranged such relative to the light source (16), that a light signal (18) emitted from the light source (16) and received by the sensor (20) is reflected on at least one surface (22) limiting the interior (14).

8. Device (12) according to claim 6 or 7,
**characterized in that**
the light source (16) has a divergent, e.g. conical, radiation characteristic.

9. Device (12) according to any one of the claims 6 to 8,
**characterized in that**
the sensor (20) is arranged in the area of the light source (16) and preferably forms a structural unit with the light source (16).

10. Device (12) according to any one of the claims 6 to 9,
**characterized in that**
the light source comprises at least one light emitting diode (16), preferably a near-infrared light emitting diode (NIR-LED), and/or a light-sensitive portion of the sensor (20) comprises silicon.

11. Device (12) according to any one of the claims 6 to 10,
**characterized in that**
the sensor (20) and/or the light source (16) is/are arranged within the interior (14) and particularly in the area of a vehicle roof, a rear window or a front window of a motor vehicle (10).

## Revendications

1. Procédé pour la surveillance de l'espace intérieur d'un véhicule (14), dans lequel
des signaux lumineux codés (18) provenant d'au moins une source de lumière (16) sont émis vers l'espace intérieur (14) avec des intervalles temporels les uns par rapport aux autres,
les signaux lumineux émis (18) sont reçus par au moins un capteur (20), et
les temps de propagation des signaux lumineux reçus (18') sont déterminés, **caractérisé en ce que**
les temps de propagation des signaux lumineux reçus (18') sont comparés à un temps de propagation de référence qui est déterminé et mémorisé lors d'une activation du procédé à partir du temps de propagation d'un signal lumineux reçu (18'), et qui est actualisé au cours d'un processus d'observation.

2. Procédé selon la revendication 1,
**caractérisé en ce que**
les signaux lumineux (18) sont émis vers l'espace intérieur (14) de telle façon que, avant leur réception par le capteur (20), ils sont réfléchis sur au moins une surface (22) qui délimite l'espace intérieur (14).

3. Procédé selon la revendication 1 ou 2,
**caractérisé en ce que**
une alarme est déclenchée si l'écart du temps de propagation d'un signal lumineux reçu (18') par rapport au temps de propagation de référence dépasse une valeur seuil prédéterminée.

4. Procédé selon l'une des revendications précédentes,
**caractérisé en ce que**
le temps de propagation de référence est actualisé si l'écart du temps de propagation d'un signal lumineux reçu (18') par rapport au temps de propagation de référence est situé au-dessus d'un niveau de bruit et ne dépasse pas la valeur seuil prédéterminée.

5. Procédé selon l'une des revendications précédentes,
**caractérisé en ce que**
le temps de propagation de référence déterminé est comparé avec un temps de propagation imposé en usine, et lors d'un écart significatif du temps de propagation de référence déterminé par rapport au temps de propagation imposé en usine, on utilise pour la poursuite du procédé à titre de temps de propagation de référence le temps de propagation imposé en usine.

6. Appareil (12) pour la surveillance de l'espace intérieur d'un véhicule (14), réalisé pour mettre en oeuvre le procédé selon l'une des revendications précédentes, comprenant au moins une source de lumière (16) pour émettre un signal lumineux codé (18) vers l'espace intérieur (14), au moins un capteur (20) pour recevoir le signal lumineux émis (18), une unité de détermination de temps de propagation (28) pour déterminer le temps de propagation du signal lumineux reçu (18'), et une unité de comparaison (32) pour comparer le temps de propagation d'un signal lumineux reçu (18') avec un temps de propagation de référence mémorisé dans un dispositif à mémoire (30), qui est actualisé au cours d'un processus de surveillance.

7. Appareil (12) selon la revendication 6,
**caractérisé en ce que**
la source de lumière (16) est orientée de telle façon, et le capteur (20) et agencé de telle façon par rapport à la source de lumière (16) qu'un signal lumineux (18) émis depuis la source de lumière (16) et reçu par le capteur (20) a été réfléchi sur au moins une surface (22) qui délimite l'espace intérieur (14).

8. Appareil selon la revendication 6 ou 7,
**caractérisé en ce que**
la source de lumière (16) présente une caractéristique de rayonnement divergente, par exemple de forme conique.

9. Appareil (12) selon l'une des revendications 6 à 8,
**caractérisé en ce que**
le capteur (20) et agencé dans la région de la source de lumière (16) et forme en particulier une unité structurelle avec la source de lumière (16).

10. Appareil (12) selon l'une des revendications 6 à 9,
**caractérisé en ce que**
la source de lumière comprend au moins une diode électroluminescente (16), en particulier une diode électroluminescente qui émet dans la plage infrarouge proche (NIR-LED), et/ou **en ce qu'**un tronçon photosensible du capteur (20) comprend du silicium.

11. Appareil (12) selon l'une des revendications 6 à 10,
**caractérisé en ce que**
le capteur (20) et/ou la source de lumière (16) est/sont agencé(s) à l'intérieur de l'espace intérieur (14), et en particulier dans la région d'une toiture, d'une vitre arrière ou d'une vitre avant d'un véhicule automobile (10).
